# EUROPÄISCHE PATENTSCHRIFT

(11) **EP 0 811 778 B1**
(45) Veröffentlichungstag und Bekanntmachung des Hinweises auf die Patenterteilung: **09.08.2000**
(21) Anmeldenummer: 96115346.7
(22) Anmeldetag: 25.09.1996
(51) Int. Cl.: F16D 3/38

(54) **Zapfenkreuzgarnitur für Kreuzgelenke**
Tronnion cross assembly for universal joints
Assemblage de croisillon pour joints universels

(30) Priorität: 05.06.1996 DE 19622444
(43) Veröffentlichungstag der Anmeldung: 10.12.1997
(73) Patentinhaber: GWB Gelenkwellenbau GmbH & Co. KG, 45143 Essen (DE)
(72) Erfinder: Faulbecker, Gerd, 45529 Hattingen (DE); Meineke, Manfred, 58453 Witten (DE); Sedlmeier, Rolf, 47475 Kamp-Lintford (DE)
(74) Vertreter: Harwardt, Günther, Dipl.-Ing.

(56) Entgegenhaltungen:
- EP-A- 0 083 161
- DE-A- 3 428 389
- DE-A- 4 408 831
- DE-U- 8 705 291
- DE-U- 8 816 432
- DE-U- 9 014 393
- FR-A- 2 450 976
- FR-A- 2 526 509
- FR-A- 2 680 556
- GB-A- 2 072 764
- US-A- 3 200 615
- US-A- 4 861 315

## Beschreibung

Die Erfindung betrifft eine Zapfenkreuzgarnitur für Kreuzgelenke, umfassend ein Zapfenkreuz mit vier Zapfen, von denen jeweils zwei eine gemeinsame Längsachse aufweisen und wobei jeder Zapfen eine Stirnfläche, eine zylindrische Lagerfläche im Anschluß an die Stirnfläche, daran wiederum anschließend zumindest eine Dichtfläche und ferner einen Sitzabschnitt mit einem Abschnitt, der zylindrisch ausgebildet ist, aufweist, je Zapfen eine Lagerbüchse, welche einen rohrförmigen, zylindrischen Mantel mit einer als Lauffläche gestalteten Innenfläche, der koaxial um den Zapfen mit einem Ringspalt angeordnet ist, einen Boden, der die Stirnfläche überdeckt, und ein offenes Ende mit einer Anlagefläche aufweist, Wälzkörper in Form von Rollen oder Nadeln, die im Ringspalt in Form eines Kranzes um den Zapfen auf der Lauffläche des Zapfens und der Innenfläche des Mantels abwälzend angeordnet sind, eine ringförmige Hauptdichtung, die vom offenen Ende her in die Lagerbüchse fest eingesetzt ist und mindestens eine Dichtlippe zur Abdichtung an der Dichtfläche des Zapfens besitzt und eine ringförmige Vordichtung, die auf dem Sitzabschnitt des Zapfens aufsitzt, und eine Dichtlippe zur dichtenden Anlage an der am offenen Ende der Lagerbüchse vorgesehenen Anlagefläche besitzt, umfaßt.

Eine solche Zapfenkreuzgarnitur ist in der FR-A-2526509 beschrieben. Der Zapfen weist einen zylindrischen Sitzabschnitt für die Festlegung der Vordichtung und daran anschließend einen kurvenförmigen Übergang zu einem Absatz des Körpers des Zapfenkreuzes auf. Die Vordichtung besitzt einen außenliegenden und zur Abdichtung gegenüber der Lagerbüche dienenden Abschnitt und einen innenliegenden im unmontierten Zustand konischen Abschnitt auf, der nach Art einer ringförmigen Zunge von dem Basiskörper der Vordichtung ausgeht. Der Basiskörper und der konisch verlaufende Ringabschnitt sind darüber hinaus durch umfangsverteilte Wände verbunden. Im montierten Zustand paßt sich der konische Abschnitt der zylindrischen Sitzfläche des Zapfens an. Die Vordichtung stützt sich zusätzlich über einen Ringvorsprung gegen eine konische Fläche des Basiskörpers des Zapfenkreuzes ab. Hierdurch wird die Vordichtung im Abstand zu dem im Anschluß an den Basiskörper zum konischen Ringabschnitt angebrachten Radiusübergang und zur Absatzfläche des Zapfens, in der der kurvenförmige und von dem zylindrischen Sitzabschnitt ausgehende Übergang endet, gehalten.

Die DE-U-8816432 beschreibt eine Zapfenkreuzgarnitur, bei der die Zapfen des Zapfenkreuzes einen zylindrischen Sitzabschnitt und einen daran anschließenden kurvenförmigen Sitzabschnitt aufweisen. Auf den Sitzabschnitten sitzt eine Vordichtung fest auf, die eine Bohrung aufweist, wobei die Bohrung im Querschnitt entsprechend dem Verlauf der Sitzabschnitte ausgebildet ist. Die Vordichtung weist ferner einen außenliegenden Abschnitt mit einer umlaufenden Dichtlippe zur dichtenden Anlage an einer Anlauffläche am offenen Ende einer Lagerbüchse auf. Im offenen Ende der Lagerbüchse sitzt eine Hauptdichtung fest ein. Diese weist Dichtlippen auf, die mit einer Hülse dichtend in Anlage sind. Die Hülse ist hierbei auf einen weiteren zylindrischen Abschnitt des Zapfens aufgeschoben.

In der EP 03 21 076 Al ist eine Zapfenkreuzgarnitur beschrieben, bei der die Hauptdichtung über einen metallischen Träger an der Innenfläche der Lagerbüchse festgelegt ist. Sie weist zwei Dichtlippen auf, von denen eine an einer zylindrischen und die andere an einer kegelig verlaufenden Dichtfläche des Zapfens des Zapfenkreuzes dichtend anliegt. Ferner ist eine Vordichtung nach Art eines Winkelringes vorgesehen, welche auf einer zylindrischen Fläche des Zapfens, die sich an die Dichtfläche für die Dichtlippen der Hauptdichtung anschließt, aufsitzt. Mit einem parallel zur Innenfläche der Lagerbüchse verlaufenden Schenkel übergreift die Vordichtung die Außenfläche der Lagerbüchse. Sie bildet mit einem nach innen gerichteten Wulst, der in eine Nut in der Außenfläche der Lagerbüchse eingreift, eine Labyrinthdichtung. Zwischen der Lagerbüchse und der Vordichtung ist kein Reibkontakt gegeben. Die Vordichtung sitzt selbst jedoch mit Reibkontakt auf dem zugehörigen Sitzabschnitt des Zapfens des Zapfenkreuzes auf.

Eine verbesserte Ausführungsform für solche Dichtungsanordungen mit Haupt- und Vordichtung für nachschmierbare Zapfenkreuzgarnituren ist beispielsweise in der DE 88 05 833 Ul beschrieben. Bei der dort gezeigten Ausführungsform sitzt die Hauptdichtung fest in der Lagerbüchse ein und dichtet mit zwei Dichtlippen auf einer zylindrischen Dichtfläche des Zapfenkreuzes. Die Vordichtung ist durch einen Ringabschnitt auf einen zylindrischen Abschnitt, der in Verlängerung der Dichtfläche für die Dichtlippen der Hauptdichtung angeordnet ist, aufgesetzt und stützt sich, in axialer Richtung des Zapfens gesehen, gegen eine Kurvenfläche ab. Die Vordichtung weist des weiteren ausgehend von diesem ersten, zur Festlegung am Zapfen dienenden Schenkel einen, bezogen auf die Längsachse radial beabstandeten zweiten Schenkel auf, der mit dem ersten Schenkel durch einen Steg verbunden ist und die Lagerbüchse außen übergreift.

Bei allen diesen Ausführungsformen ist von Nachteil, daß kein definierter Sitz der Vordichtung auf dem Zapfen gegeben ist, so daß ein erhöhter Verschleiß eintreten kann und Undichtigkeiten die Folge sind. Die Vordichtung kann sich auf dem Zapfen drehen. Dies bedeutet, daß sich der Sitz fortschreitend lockert. Es kann Schmiermittel austreten, und die Dichtung kann bei einem Wandern auf der Sitzfläche zerstört werden.

Bei Nutzkraftwagen, insbesondere solchen mit höherer Leistung, ist es das Ziel, die Wartungsintervalle auf ein Minimum zu reduzieren bzw. möglichst eine vorgegebene Lebensdauer, die bei Laufleistungen für Nutzkraftwagen in der Größenordnung von 1 Million Kilometer liegt, ohne Wartung zu gewährleisten. Dies betrifft vor allem Fahrzeuge mit einem zulässigen Gesamtgewicht größer 15 Tonnen.

Der Erfindung liegt die Aufgabe zugrunde, eine Zapfenkreuzgarnitur für Kreuzgelenke vorzuschlagen, die eine verbesserte Lebensdauer aufweist. Dies bedeutet, sie soll beispielsweise für Fahrzeuge, die Kreuzgelenkwellen aufweisen, in denen solche Zapfenkreuzgarnituren eingesetzt sind, eine hohe Laufleistung gewährleisten.

Diese Aufgabe wird erfindungsgemäß dadurch gelöst, daß der Sitzabschnitt der Zapfen ferner einen vom zylindrischen Sitzabschnitt ausgehenden und in einem Schnitt, der die Längsachse enthält, gesehen, kurvenförmig von der Längsachse weg verlaufenden kurvenförmigen Sitzabschnitt umfaßt, daß die Vordichtung in ihrer Bohrung, mit der sie auf dem zylindrischen Sitzabschnitt mit Vorspannung aufsitzt, einen ersten Bohrungsabschnitt mit mindestens einem umlaufenden und radial nach innen zur Längsachse vorspringenden Wulst aufweist, der im unmontierten, d.h. entspannten Zustand, eine Öffnung freiläßt, die kleiner als der Durchmesser des zylindrischen Sitzabschnittes des Zapfens ist und dadurch im montierten Zustand die Einheit aus Zapfen und Vordichtung gegenüber der Lagerbüchse drehbar ist, und daß die Vordichtung ferner einen zweiten Bohrungsabschnitt aufweist, der dem Verlauf des kurvenförmigen Sitzabschnittes des Zapfens angepaßt ist.

Durch die Anordnung von mindestens einem Wulst, der auf dem zylindrischen Sitzabschnitt sitzt, wird ein fester Sitz erzielt. Die Vorspannung, mit der die Vordichtung auf dem Zapfen gehalten ist, läßt sich durch die Bemessung des ersten Wulstes bestimmen.

Genügt die Vorsehung eines Wulstes nicht, so können auch mehrere parallel zueinander vorgesehen sein. Hiermit wird gewährleistet, daß zwischen Vordichtung und dem Zapfen eine statische Abdichtung gegeben ist. Damit werden eindeutige Bewegungsverhältnisse erzielt, d.h. die Einheit, bestehend aus Zapfen und Vordichtung, bewegt sich gegenüber der in der Gabelbohrung des Gabelarmes festsitzenden Lagerbüchse, und zwar an der Stelle, die für eine Berührungsdichtung mit Bewegung vorgesehen ist, nämlich im Bereich der Dichtlippe, die zu einer entsprechenden Anlauffläche an dem offenen Ende der Lagerbüchse in Anlage ist. Es ergeben sich somit eindeutige Dichtverhältnisse. Ferner ist gewährleistet, daß die Vordichtung in ihrer Position verbleibt, d.h. auch in Axialrichtung bei Auftreten von Axialkräften keine Lageveränderung erfährt, die negative Auswirkungen auf die Lebensdauer der Dichtlippe zur Abdichtung gegenüber der Lagerbüchse haben kann. Damit bleiben die Vorspannungsverhältnisse an der Dichtlippe, die an der Anlauffläche am offenen Ende der Lagerbüchse abdichtet, konstant. Darüber hinaus sorgt die Form des Sitzabschnittes dafür, daß aufgrund der Vorspannung auch keine Axialkräfte entstehen können, die eine Verschiebung der Vordichtung bewirken könnten.

Es wird jedoch ein Aufschieben der Vordichtung auf den Sitzabschnitt in die Endposition, die erforderlich ist, damit die Dichtlippe ihre konstruktiv vorbestimmte Lage gegenüber der Anlauffläche an der Lagerbüchse einnimmt, gewährleistet.

In Ausgestaltung der Erfindung ist vorgesehen, daß der zweite Bohrungsabschnitt ebenfalls mit Vorspannung auf dem kurvenförmigen Sitzabschnitt aufsitzt. Dieser ist aufgrund der hohen Vorspannung, der durch die Wülste erzielt wird, jedoch nicht in der Lage, die Vordichtung zu verschieben. Vorzugsweise sind zwei Wülste dem ersten Bohrungsabschnitt der Vordichtung zugeordnet. Um die hohe Vorspannung über einen langen Zeitraum aufrecht zu erhalten, ist ferner vorgesehen, daß die aus einem Elastomer-Werkstoff bestehende Vordichtung eine Einlage aus Metall aufweist, die verstärkend wirkt. Um die gewünschten Vorspannungsverhältnisse der Vordichtung zum Zapfen einerseits und die gewünschte Vorspannung der Dichtlippe zur Anlauffläche der Lagerbüchse andererseits unabhängig voneinander gestalten zu können, ist in Ausgestaltung der Erfindung vorgesehen, daß die Vordichtung in einer Schnittebene, welche die Längsachse enthält, U-förmig gestaltet ist, wobei der der Längsachse nahe erste Schenkel die Bohrung aufweist, mit der sie auf dem Sitzabschnitt des Zapfens aufsitzt, und deren mit dem ersten Schenkel durch einen Steg verbundene außenliegende zweite Schenkel die Dichtlippe zur Anlage an der Anlagefläche der Lagerbüchse aufweist.

Um zu erreichen, daß die Vordichtung zusammen mit der Lagerbüchse und der Hauptdichtung in einem Montagevorgang montiert werden können, ist in weiterer Ausgestaltung der Erfindung vorgesehen, daß die Hauptdichtung einen ringförmigen metallischen Träger oder eine Verstärkungseinlage aufweist, welche (-r) aus dem offenen Ende der Lagerbüchse in Richtung auf die Vordichtung vorsteht und in den Ringzwischenraum zwischen den beiden Schenkeln der Vordichtung ragt. Um die Kräfte, die der Träger auf die Vordichtung ausübt, günstig einleiten zu können, ist der Träger an seinem zwischen die Schenkel der Vordichtung ragenden Ende mit einem bezüglich der Längsachse nach außen gerichteten Kragen versehen. Dieser Kragen läuft gegen Nocken an, die ihm gegenüberliegend an dem Steg der Vordichtung im Ringzwischenraum angeformt sind.

Die Dichtwirkung der Vordichtung kann dadurch noch weiter erhöht werden, daß der äußere zweite Schenkel der Vordichtung eine zweite umlaufende Dichtlippe aufweist, die an der Außenfläche des Trägers dichtend anliegt. Diese zweite Dichtlippe kann gleichzeitig dazu genutzt werden, die Vordichtung zu der unmontierten Lagerbüchse vormontiert zu halten. Die Vordichtung hängt sozusagen am Träger der Hauptdichtung, die in der Lagerbüchse fest einsitzt, lose an.

Ein bevorzugtes Ausführungsbeispiel der Erfindung ist in der Zeichnung schematisch dargestellt.

Es zeigt
- Figur 1: eine Kreuzgelenkwelle in der Seitenansicht im Halbschnitt,
- Figur 2: eine Einzelheit bezüglich der Zapfenkreuzgarnitur, und zwar insbesondere hinsichtlich der Ausbildung und Anordnung der Vordichtung im zu Figur 1 vergrößerten Maßstab und
- Figur 3: einen Querschnitt durch eine Vordichtung als Einzelteil im nochmals vergrößerten Maßstab.

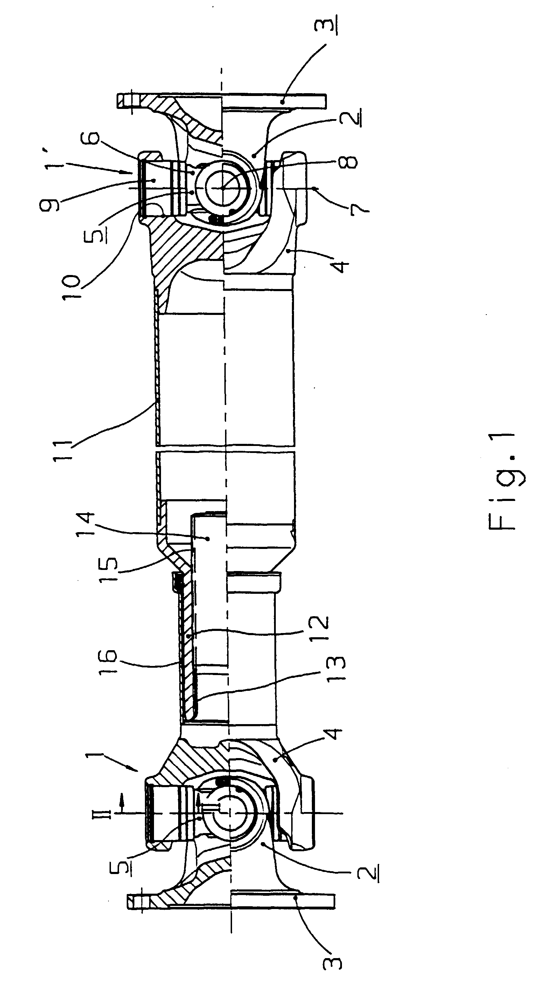

Die Figur 1 zeigt eine Kreuzgelenkwelle mit den beiden Kreuzgelenken 1, 1'. Jedes der beiden Kreuzgelenke 1, 1' weist eine erste Gelenkgabel 2 auf, die mit einem Flansch 3 versehen ist. Ferner ist eine zweite Gelenkgabel 4 je Kreuzgelenk 1, 1' vorgesehen. Beide Gelenkgabeln 2, 4 sind durch eine Zapfenkreuzgarnitur 5 derart miteinander verbunden, daß die erste Gelenkgabel 2 Schwenkbewegungen um die Längsachse 8 durchführen kann und die Baueinheit aus der ersten Gelenkgabel 2 und der Zapfenkreuzgarnitur 5 um die zweite Längsachse 7 eine Schwenkbewegung im Verhältnis zur zweiten Gelenkgabel 4 durchführen kann. Die Zapfenkreuzgarnitur 5 umfaßt ein Zapfenkreuz 6 mit vier Zapfen 17, zu denen jeweils eine Lagerungsanordnung getroffen ist, welche eine Lagerbüchse 9 umfaßt, die in einer Gabelbohrung 10 der jeweiligen Gelenkgabeln 2, 4 aufgenommen ist.

An die zum Gelenk 1 gehörende zweite Gelenkgabel 4 ist ein Rohr 11 fest angeschlossen. Dieses wiederum trägt die Schiebehülse 12, die eine zentrale Bohrung aufweist, in deren Wandung eine Profilverzahnung 13 eingearbeitet ist, deren Zähne parallel zur Längsachse verlaufen. In dieser ist ein Schiebezapfen 14, der außen eine Profilverzahnung 15 aufweist, längs verstellbar aufgenommen. Der Schiebezapfen 14 ist mit der zweiten Gelenkgabel 4 des Kreuzgelenkes 1 fest verbunden. Somit können in der Längsverschiebung, welche den Schiebezapfen 14 und die Schiebehülse 12 umfaßt, Längenänderungen, die aus der Veränderung der Lage der Kreuzgelenkwelle und damit der Abwinklung an den beiden Kreuzgelenken 1, 1' resultieren, aufgenommen werden. Die Längsverschiebung ist durch ein Schutzrohr 16, das an der zweiten Gelenkgabel 4 des Kreuzgelenkes 1' mit einem Ende festgelegt ist und die Außenfläche der Schiebehülse 12 überdeckt und an ihrem anderen Ende eine Dichtung zur Abdichtung gegenüber dieser Außenfläche aufweist, abgedichtet. Die beiden Flansche 3 dienen zum Anschluß an ein treibendes bzw. ein getriebenes Teil des Antriebstranges, in welchem die Kreuzgelenkwelle eingesetzt ist.

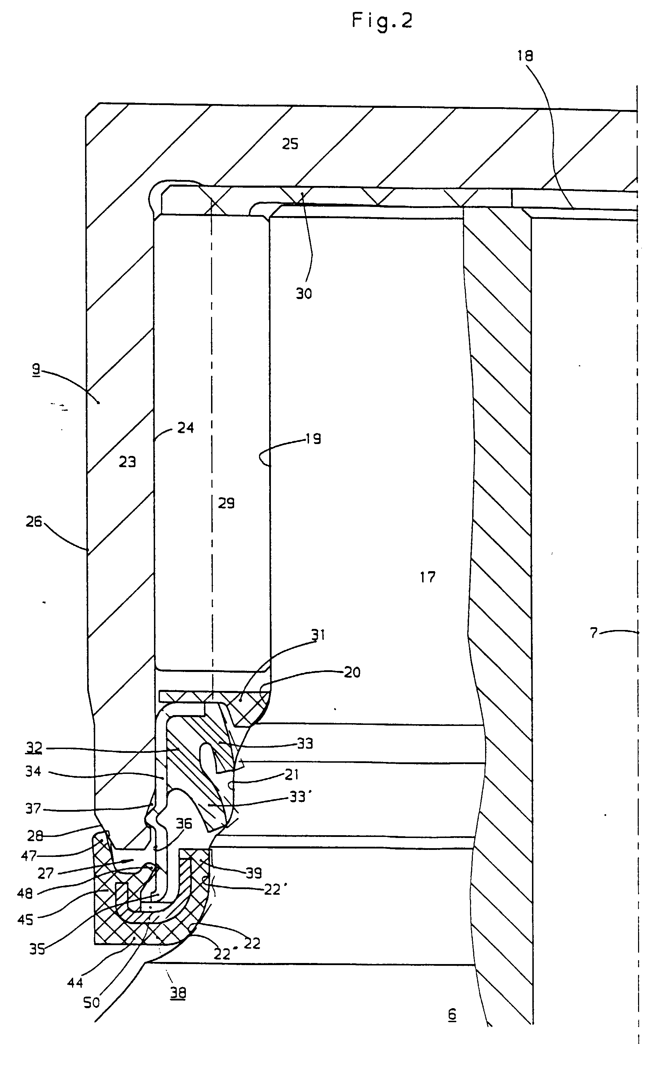

Die Figur 2 zeigt ein Detail der Zapfenkreuzgarnitur 5 im Halbschnitt mit einer Schnittebene, welche die Längsachse 7 enthält. Es ist ein Teil des Zapfenkreuzes 6 mit dem Zapfen 17 ersichtlich. Der Zapfen 17 besitzt eine Stirnfläche 18 und von dieser ausgehend zunächst eine zylindrische Lauffläche 19.

An die zylindrische Lauffläche 19 schließt sich von der Stirnfläche 18 weg eine Schulter 20 an, deren Querschnitt sich von der zylindrischen Lauffläche 19 ausgehend vergrößert. Sie besitzt den Verlauf einer Kurve. An diese wiederum schließt sich eine Dichtfläche 21 an, die beispielsweise aus einer Kegelfläche und einer Zylinderfläche mit Radiusübergängen aufgebaut ist. An die Dichtfläche 21 schließt sich mit einem kegeligen Übergang ein Sitzabschnitt 22 an, die zur kegeligen Übergangsfläche hin einen zylindrischen Sitzabschnitt 22' und von diesem ausgehend einen kurvenförmigen Sitzabschnitt 22'' besitzt. Auf den Zapfen 17 ist eine Lagerbüchse 9 aufgesetzt, welche einen Mantel 23 aufweist, der eine zylindrische Innenfläche 24 und eine zylindrische Außenfläche 26 besitzt. Die zylindrische Außenfläche 26 dient zur Aufnahme der Lagerbüchse 9 in der Gabelbohrung 10 einer Gelenkgabel. Ferner besitzt die Lagerbüchse 9 einen Boden 25, dessen Bodeninnenfläche die Stirnfläche 18 des Zapfens 17 überdeckt. Das andere Ende der Lagerbüchse 9 ist als offenes Ende 27 gestaltet. An der Stirnfläche der Lagerbüchse 9 ist im Bereich des offenen Endes 27 eine Anlauffläche 28 vorgesehen, die kegelig verläuft. In dem Ringspalt zwischen der Innenfläche 24 des Mantels 23 der Lagerbüchse 9 und der zylindrischen Lauffläche 19 des Zapfens 17 ist ein Kranz von Wälzkörpern 29 in Form von Nadeln oder Rollen angeordnet. Zum Boden 25 der Lagerbüchse 9 hin stützen sich die Wälzkörper 29 an einer Gleitscheibe 30 ab. Sie ist zwischen der Bodeninnenfläche und der Stirnfläche 18 angeordnet und ragt axial bezüglich der Längsachse 7 in den Ringspalt, in dem die Wälzkörper 29 angeordnet sind, hinein. Die Bewegung der Wälzkörper 29 parallel zur Längsachse 7 und von der Stirnfläche 18 weg wird durch eine Anlaufscheibe 31 begrenzt, welche eine Stützbohrung aufweist, mit der sie an der Schulter 20 des Zapfens 17 anliegt. In der Stützbohrung sind umfangsverteilt Nuten vorgesehen. Diese dienen dazu, Schmiermittel aus dem Bereich des Ringspaltes, in dem die Wälzkörper 29 angeordnet sind, in Richtung auf die Hauptdichtung 32 durchzulassen. Die Hauptdichtung 32 weist entlang der Längsachse 7 hintereinander zwei Dichtlippen 33, 33' auf. Ferner ist erkennbar, daß die Dichtlippen 33, 33' ausgehend von dem Träger 34 in Richtung von der Stirnfläche 18 weg auf die Dichtfläche 21 zu verlaufen. Die Hauptdichtung 32 umfaßt ferner einen Träger 34, welcher als metallische Hülse gestaltet ist und in Richtung auf die Anlaufscheibe 31 einen einwärts, d.h. auf die Längsachse 7 zu verlaufenden, ersten Kragen besitzt. Die Hauptdichtung 32 sitzt mit der Außenfläche 36 des Trägers 34 in der die Innenfläche 24 aufweisenden Bohrung der Lagerbüchse 9 fest ein. Der zur Abdichtung dienende und die Dichtlippen 33, 33' aufweisende Teil der Hauptdichtung 32 ist aus einem Elastomer hergestellt, das mit dem Träger 34 fest, d.h. unlösbar, verbunden ist. Der Träger 34 weist einen über das offene Ende 27 der Lagerbüchse 9 vorstehenden Abschnitt auf. Das aus der Lagerbüchse 9 herausragende Ende des Trägers 34 besitzt einen nach außen, d.h. von der Längsachse 7 weg gerichteten zweiten Kragen 35. Die Hauptdichtung 32 kann zusätzlich durch Ausprägungen, die umfangsverteilt am Träger 34 angeordnet sind, gegenüber der Lagerbüchse 9 gesichert werden. Durch partielle Verformung werden Abschnitte des Trägers 34 in eine umlaufende Nut 37 in der Innenfläche 24 der Lagerbüchse 9 hinein verformt.

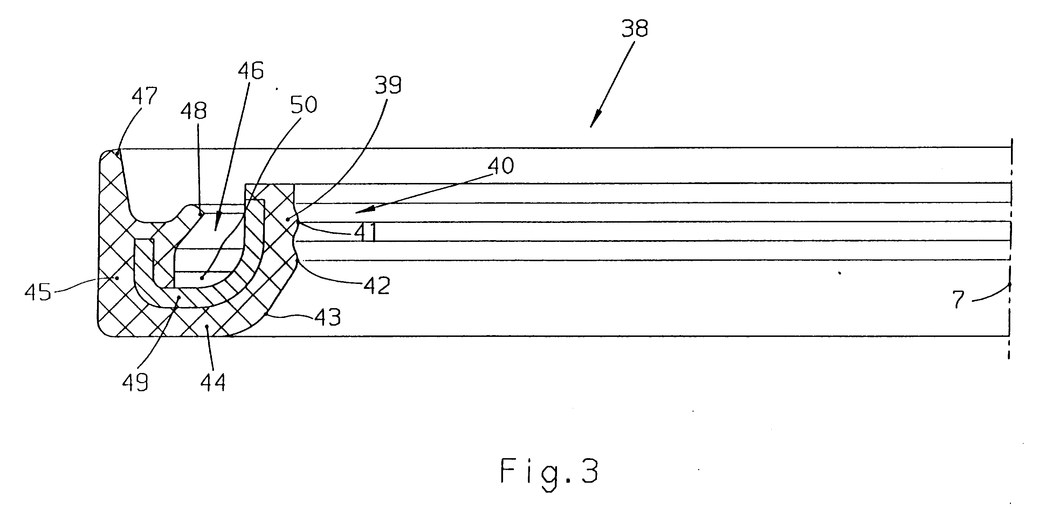

Vor dem offenen Ende 27 der Lagerbüchse 9 liegt die Vordichtung 38. Im Zusammenhang mit der Beschreibung der Vordichtung 38 wird auch auf die Zeichnungsfigur 3 verwiesen. Die Vordichtung 38 umfaßt einen ersten Schenkel 39, mit einer Bohrung 40, die einen ersten Bohrungsabschnitt mit einem ersten umlaufenden Wulst 41 aufweist, der in dem in Figur 2 dargestellten montierten Zustand durch Aufpressen der Vordichtung 38 auf den Zapfen 17 bzw. deren zylindrischen Sitzabschnitt 22' so verformt wurde, daß er sich der zylindrischen Kontur des zylindrischen Sitzabschnittes 22' angepaßt hat. In gestrichelten Linien und in Figur 3 ist der erste Wulst 41 in seiner entspannten Lage ersichtlich. Gleiches gilt auch für den zweiten Wulst 42, der etwa im Übergangsbereich zwischen dem zylindrischen Sitzabschnitt 22' und dem kurvenförmigen Sitzabschnitt 22'' liegt.

An den zweiten Wulst 42 schließt sich der kurvenförmige Bohrungsabschnitt 43 an, mit dem der erste Schenkel 39 der Vordichtung 38 auf dem entsprechenden kurvenförmigen Sitzabschnitt 22'' des Zapfens 17 aufsitzt. Der erste Schenkel 39 geht in den Steg 44 über, der im wesenlichen sich radial von der Längsachse 7 entfernend verläuft. Im radialen Abstand zum ersten Schenkel 39 schließt sich an den Steg 44 der außenliegende zweite Schenkel 45 an.'Dieser besitzt an seinem in Richtung auf das offene Ende 27 der Lagerbüchse 9 vorstehenden Ende eine erste Dichtlippe 47, die zur Anlage an der kegeligen Anlauffläche 28 der Lagerbüchse 9 bestimmt ist. Es ist ebenfalls erkennbar, daß die erste Dichtlippe 47 an der Anlauffläche 28 mit Vorspannung anliegt. Die entspannte Stellung ist durch gestrichelte Linien dargestellt. Der Träger 34 der Hauptdichtung 32 ragt in den Ringzwischenraum 46 zwischen den beiden Schenkeln 39, 45 der Vordichtung 38 hinein. Dem zweiten Schenkel 45 der Vordichtung 38 ist eine zweite Dichtlippe 48 zugeordnet, die zur Abdichtung an der Außenfläche 36 des Trägers 34 mit Vorspannung anliegt. Dies ist ebenfalls dadurch angedeutet, daß der entspannte Zustand der Dichtlippe 48 in gestrichelten Linien gezeigt ist. Ferner ist im Ringzwischenraum 46 zwischen den beiden Schenkeln 39, 45 zum Steg 44 hin die Vordichtung 38 mit umfangsverteilt angeordneten Nocken 50 versehen, die dem zweiten Kragen 35 des Trägers 34 der Hauptdichtung 32 gegenüberliegen. Der Träger 34 dient mit seinem Kragen 35 dazu, die montierte Einheit aus Lagerbüchse 9 mit Gleitscheibe 30, Wälzkörpern 29, Anlaufscheibe 31, Hauptdichtung 32 und die an den Träger 34 angehängte Vordichtung 38 auf den Zapfen 17 derart aufzuschieben, daß ein Aufpressen der Vordichtung 38 auf dem Sitzabschnitt 22 lagegerecht so erfolgt, daß die beiden Dichtlippen 47 und 48 nicht überbeansprucht werden. Die zweite Dichtlippe 48 dient gleichzeitig dazu, die Vordichtung 38 im Verhältnis zur Lagerbüchse 9 vormontiert zu halten, da der freie Öffnungsquerschnitt der Dichtlippe 48 im montierten Zustand, anliegend auf der Außenfläche 36, kleiner ist als der Außendurchmesser des Kragens 35. Ferner ist erkennbar, daß die beiden Dichtlippen 47, 48 der Vordichtung 38 in Richtung auf das offene Ende 27 bzw. den Boden 25 der Lagerbüchse 9 orientiert sind. Des weiteren ist die Vordichtung 38 mit einer Einlage 49 aus Metall zur Verstärkung versehen. Für den Austritt des Schmiermittels sind Durchlässe im Bereich des zweiten Kragens 35 dadurch realisiert, daß zwischen den Nocken 50 jeweils ein Umfangsabstand gegeben ist.

Bei der Montage der Lagerbüchse 9 in der vorbeschriebenen Einheit sind die Wälzkörper 29 mit Schmierfett eingesetzt und kleben sozusagen an der Innenfläche 24 der Lagerbüchse 9. Beim Aufschieben der Lagerbüchse 9 in der vormontierten Form auf den Zapfen 17 stützt sich der Träger 34 mit seinem Kragen 35 gegen die Nocken 50 der Vordichtung 38 ab und preßt diese auf den Sitzabschnitt 22 auf, bis die konstruktiv vorbestimmte Position erreicht ist.

### Bezugszeichenliste

- 1, 1': Kreuzgelenke
- 2: erste Gelenkgabel
- 3: Flansch
- 4: zweite Gelenkgabel
- 5: Zapfenkreuzgarnitur
- 6: Zapfenkreuz
- 7, 8: Längsachse
- 9: Lagerbüchse
- 10: Gabelbohrung
- 11: Rohr
- 12: Schiebehülse
- 13: Profilverzahnung
- 14: Schiebezapfen
- 15: Profilverzahnung
- 16: Schutzrohr
- 17: Zapfen
- 18: Stirnfläche
- 19: zylindrische Lauffläche
- 20: Schulter
- 21: Dichtfläche
- 22: Sitzabschnitt
- 22': zylindrischer Sitzabschnitt
- 22'': kurvenförmiger Sitzabschnitt
- 23: Mantel
- 24: Innenfläche des Mantels
- 25: Boden
- 26: Außenfläche des Mantels
- 27: offenes Ende der Lagerbüchse
- 28: Anlauffläche
- 29: Wälzkörper
- 30: Gleitscheibe
- 31: Anlaufscheibe
- 32: Hauptdichtung
- 33, 33': Dichtlippe
- 34: Träger
- 35: zweiter Kragen
- 36: Außenfläche
- 37: Nut
- 38: Vordichtung
- 39: erster Schenkel
- 40: Bohrung
- 41: erster Wulst
- 42: zweiter Wulst
- 43: kurvenförmiger Bohrungsabschnitt
- 44: Steg
- 45: zweiter Schenkel
- 46: Ringzwischenraum
- 47: erste Dichtlippe
- 48: zweite Dichtlippe
- 49: Einlage
- 50: Nocken

## Patentansprüche

1. Zapfenkreuzgarnitur (5) für Kreuzgelenke (1, 1'), umfassend ein Zapfenkreuz (6) mit vier Zapfen (17), von denen jeweils zwei eine gemeinsame Längsachse (7, 8) aufweisen und wobei jeder Zapfen (17) eine Stirnfläche (18), eine zylindrische Lagerfläche (19) im Anschluß an die Stirnfläche (18), daran wiederum anschließend zumindest eine Dichtfläche (21) und ferner einen Sitzabschnitt (22) mit einem Abschnitt (22'), der zylindrisch ausgebildet ist, aufweist,
je Zapfen (17) eine Lagerbüchse (9), welche einen rohrförmigen, zylindrischen Mantel (23) mit einer als Lauffläche gestalteten Innenfläche (24), der koaxial um den Zapfen (17) mit einem Ringspalt angeordnet ist, einen Boden (25), der die Stirnfläche (18) überdeckt, und ein offenes Ende (27) mit einer Anlauffläche (28) aufweist,
Wälzkörper (29) in Form von Rollen oder Nadeln, die im Ringspalt in Form eines Kranzes um den Zapfen (17) auf der Lauffläche (19) des Zapfens (17) und der Innenfläche (24) des Mantels (23) abwälzend angeordnet sind,
eine ringförmige Hauptdichtung (32), die vom offenen Ende (27) her in die Lagerbüchse (9) fest eingesetzt ist und mindestens eine Dichtlippe (33, 33') zur Abdichtung an der Dichtfläche (21) des Zapfens (17) besitzt, und
eine ringförmige Vordichtung (38), die auf dem Sitzabschnitt (22) des Zapfens (17) aufsitzt und eine Dichtlippe (47) zur dichtenden Anlage an der am offenen Ende (27) der Lagerbüchse (9) vorgesehenen Anlauffläche (28) besitzt, umfaßt,
dadurch gekennzeichnet,
daß der Sitzabschnitt (22) der Zapfen (17) ferner einen vom zylindrischen Sitzabschnitt (22') ausgehenden und in einem Schnitt, der die Längsachse (7) enthält, gesehen, kurvenförmig von der Längsachse (7) weg verlaufenden kurvenförmigen Sitzabschnitt (22'') umfaßt,
daß die Vordichtung (38) in ihrer Bohrung (40), mit der sie auf dem zylindrischen Sitzabschnitt (22') mit Vorspannung aufsitzt, einen ersten Bohrungsabschnitt mit mindestens einem umlaufenden und radial nach innen zur Längsachse (7) vorspringenden Wulst (41) aufweist, der im unmontierten, d.h. entspannten Zustand, eine Öffnung freiläßt, die kleiner als der Durchmesser des zylindrischen Sitzabschnittes (22') des Zapfens (17) ist und dadurch im montierten Zustand die Einheit aus Zapfen (17) und Vordichtung (38) gegenüber der Lagerbüchse (9) drehbar ist, und daß die Vordichtung (38) ferner einen zweiten Bohrungsabschnitt (43) aufweist, der dem Verlauf des kurvenförmigen Sitzabschnittes (22'') des Zapfens (17) angepaßt ist.

2. Zapfenkreuzgarnitur nach Anspruch 1,
dadurch gekennzeichnet,
daß der zweite Bohrungsabschnitt (43) ebenfalls mit Vorspannung auf dem kurvenförmigen Sitzabschnitt (22') aufsitzt.

3. Zapfenkreuzgarnitur nach Anspruch 1,
dadurch gekennzeichnet,
daß dem ersten Bohrungsabschnitt der Vordichtung (38) zwei Wülste (41, 42) zugeordnet sind.

4. Zapfenkreuzgarnitur nach Anspruch 1,
dadurch gekennzeichnet,
daß die aus einem Elastomer-Werkstoff bestehende Vordichtung (38) eine Einlage (49) aus Metall aufweist.

5. Zapfenkreuzgarnitur nach einem der Ansprüche 1 bis 4,
dadurch gekennzeichnet,
daß die Vordichtung (38) in einer Schnittebene, welche die Längsachse (7) enthält, U-förmig gestaltet ist, wobei der der Längsachse (7) nahe erste Schenkel (39) die Bohrung (40) aufweist, mit der sie auf dem Sitzabschnitt (22) des Zapfens (17) aufsitzt, und deren mit dem ersten Schenkel (39) durch einen Steg (44) verbundener außenliegende zweite Schenkel (45) die Dichtlippe (47) zur Anlage an der Anlauffläche (28) der Lagerbüchse (9) aufweist.

6. Zapfenkreuzgarnitur nach Anspruch 5,
dadurch gekennzeichnet,
daß die Hauptdichtung (32) einen ringförmigen metallischen Träger (34) oder eine Verstärkungseinlage aufweist, welche (-r) aus dem offenen Ende (27) der Lagerbüchse (9) in Richtung auf die Vordichtung (38) vorsteht und in den Ringzwischenraum (46) zwischen den beiden Schenkeln (39, 45) der Vordichtung (38) ragt.

7. Zapfenkreuzgarnitur nach Anspruch 6,
dadurch gekennzeichnet,
daß der Träger (34) an seinem zwischen die Schenkel (39, 45) der Vordichtung (38) ragenden Ende mit einem bezüglich der Längsachse (7) nach außen gerichteten Kragen (35) versehen ist und im Ringzwischenraum (46) dem Steg (44) der Vordichtung (38), dem Kragen (35) gegenüberliegend, Nocken (50) umfangsverteilt angeformt sind.

8. Zapfenkreuzgarnitur nach Anspruch 6,
dadurch gekennzeichnet,
daß der äußere, zweite Schenkel (45) der Vordichtung (38) eine zweite umlaufende Dichtlippe (48) aufweist, die an der Außenfläche (36) des Trägers (34) dichtend anliegt.

## Claims

1. A cross member assembly (5) for universal joints (1, 1'), comprising a cross member (6) with four arms (17) each two of which comprise a common longitudinal axis (7, 8), wherein each arm (17) comprises an end face (18), a cylindrical bearing face (19) which follows the end face (18) and which, in turn, is followed by a sealing face (21), and furthermore a seat portion (22) with a portion (22') which is cylindrical in shape;
per arm (17) a bearing bush (9) which comprises a tubular, cylindrical casing (23) which is provided with an inner face (24) designed as a running face and which is arranged coaxially around the arm (17) with an annular gap therebetween; and said bearing bush (9) furthermore comprising a base (25) which covers the end face (18); and an open end (27) with a contact face (28);
rolling contact members (29) in the form of rollers or needles which are rollingly arranged in the annular gap in the form of a collar around the arm (17) on the running face (19) of the arm (17) and on the inner face (24) of the casing (23);
an annular main seal (9) which is firmly inserted into the bearing bush (9) from the open end (27) and is provided with at least one sealing lip (33, 33') for achieving a sealing effect relative to the sealing face (21) of the arm (17); and
an annular pre-seal (38) which is positioned on the seat portion (22) of the arm (17) and is provided with a sealing lip (47) for sealingly resting against the contact face (28) provided at the open end (27) of the bearing bush (9),
characterised in
that the seat portion (22) of the arms (17) furthermore comprises a curved seat portion (22'') which starts from a cylindrical seat portion (22') and which, if viewed in a section containing the longitudinal axis (7), extends curve-like away from the longitudinal axis (7);
that the pre-seal (38), in its bore (40) by means of which it is positioned with pre-tension on the cylindrical seat portion (22'), comprises a first bore portion with at least one continuous bead (41) projecting radially inwardly towards the longitudinal axis (7), which first bore portion, in the un-mounted, i.e. untensioned condition, leaves open an aperture which is smaller than the diameter of the cylindrical seat portion (22') of the arm (17), as a result of which, the unit consisting of the arm (17) and the pre-seal (38), in the mounted condition, is rotatable relative to the bearing bush (9) and that the pre-seal (38), furthermore, comprises a second bore portion (43) which is adapted to the contour of the curved seat portion (22") of the arm (17).

2. A cross member assembly according to claim 1,
characterised in
that the second bore portion (43) is also positioned with pre-tension on the curved seat portion (22').

3. A cross member assembly according to claim 1,
characterised in
that two beads (41, 42) are associated with the first bore portion of the pre-seal (38).

4. A cross member assembly according to claim 1,
characterised in
that the pre-seal (38) consisting of an elastomer material comprises an insert (49) made of metal.

5. A cross member assembly according to any one of claims 1 to 4,
characterised in
that, in a sectional plane containing the longitudinal axis, the pre-seal (38) is U-shaped, that the first leg (39) close to the longitudinal axis (7) comprises the bore (40) by means of which the pre-seal (38) is positioned on the seat portion (22) of the arm (17) and that the outer second leg (45) connected to the first leg (39) by means of a web (44) is provided with the sealing lip (47) intended to contact the contact face (28) of the bearing bush (9).

6. A cross-member assembly according to claim 5,
characterised in
that the main seal (32) comprises an annular metallic carrier (34) or a reinforcing insert which projects from the open end (27) of the bearing bush (9) in the direction of the pre-seal (38) and extends into the annular space (46) between the two legs (39, 45) of the pre-seal (38).

7. A cross member assembly according to claim 6,
characterised in
that the carrier (34), at its end extending between the legs (39, 45) of the pre-seal (38), is provided with a collar (35) directed outwardly with reference to the longitudinal axis (7) and that in the annular space (46), cams (50) are formed on to the web (44) of the pre-seal (38) so as to be arranged opposite the collar (35) in a circumferentially distributed way.

8. A cross member assembly according to claim 6,
characterised in
that the outer, second leg (45) of the pre-seal (38) comprises a second, continuous sealing lip (48) which sealingly rests against the outer face (36) of the carrier (34).

## Revendications

1. Garniture de croisillon (5) pour joint à croisillon (1, 1'), comprenant un croisillon (6) avec quatre tenons (17), parmi lesquels deux tenons respectifs présentent un axe longitudinal commun (7, 8), et chaque tenon (17) présente une surface frontale (18), une surface de portée cylindrique (19) à la suite de la surface frontale (18), et à nouveau à la suite de cette surface de portée au moins une surface d'étanchement (21) et en outre un tronçon d'assise (22) avec un tronçon (22') réalisé sous forme cylindrique,
une douille de palier (29) pour chaque tenon (17), laquelle présente une enveloppe cylindrique de forme tubulaire (23) avec une surface intérieure (24) réalisée sous forme de surface de déplacement agencée coaxialement autour du tenon (17) avec un intervalle annulaire, un fond (25) qui recouvre la surface frontale (18), et une extrémité ouverte (27) avec une surface d'engagement (28),
des corps de roulement (29) sous la forme de rouleaux ou d'aiguilles, agencés dans l'intervalle annulaire sous la forme d'une couronne, capables de rouler autour du tenon (17) sur la surface de déplacement (19) du tenon (17) et sur la surface intérieure (24) de l'enveloppe (23),
un joint principal de forme annulaire (32), mis en place fermement dans la douille de palier (9) depuis l'extrémité ouverte (27) et possédant au moins une lèvre d'étanchement (33, 33') pour l'étanchéité contre la surface d'étanchement (21) du tenon (17), et un joint préliminaire de forme annulaire (38), qui repose sur le tronçon d'assise (22) du tenon (17) et possède une lèvre d'étanchement (47) pour venir en contact étanche contre la surface d'engagement (28) prévue à l'extrémité ouverte (27) de la douille de palier (9),
caractérisée en ce que
le tronçon d'assise (22) du tenon (17) comprend en outre un tronçon d'assise (22"') de forme courbe qui part du tronçon d'assise cylindrique (22') et qui, vu dans une coupe qui contient l'axe longitudinal (7), s'étend sous forme incurvée en s'éloignant de l'axe longitudinal (7),
en ce que le joint préliminaire (38) présente, dans son perçage (40) par lequel il est coiffé sous précontrainte sur le tronçon d'assise cylindrique (22'), un premier tronçon de perçage présentant au moins un bourrelet périphérique (41) en saillie radialement vers l'intérieur en direction de l'axe longitudinal (7), ce bourrelet laissant dans la condition non montée, c'est-à-dire détendue, une ouverture libre plus petite que le diamètre du tronçon d'assise cylindrique (22') du tenon (17), et que grâce à cela dans la situation montée l'unité formée par le tenon (17) et le joint préliminaire (38) est capable de tourner par rapport à la douille de palier (9),
et en ce que le joint préliminaire (38) comprend en outre un deuxième tronçon de perçage (43), adapté au tracé du tronçon d'assise de forme incurvée (22") du tenon (17).

2. Garniture de croisillon selon la revendication 1, caractérisée en ce que le deuxième tronçon de perçage (43) est également coiffé avec précontrainte sur le tronçon d'assise (22') de forme incurvée.

3. Garniture de croisillon selon la revendication 1, caractérisée en ce que deux bourrelets (41, 42) sont associés au premier tronçon de perçage du joint préliminaire (38).

4. Garniture de croisillon selon la revendication 1, caractérisée en ce que le joint préliminaire (38) réalisé avec un matériau élastomère comprend un insert (49) en métal.

5. Garniture de croisillon selon l'une des revendications 1 à 4, caractérisée en ce que le joint préliminaire (38) est conçu en forme de U dans un plan de coupe qui contient l'axe longitudinal (7), et le premier bras (39) proche de l'axe longitudinal (7) comporte le perçage (40) au moyen duquel le joint est coiffé sur le tronçon d'assise (22) du tenon (17), et le deuxième bras (45) extérieur, relié au premier bras (39) par une âme (44), comporte la lèvre d'étanchement (47) destinée à s'appliquer contre la surface d'engagement (28) de la douille de palier (9).

6. Garniture de croisillon selon la revendication 5, caractérisée en ce que le joint principal (32) comprend un support métallique (34) de forme annulaire, ou un insert de renfort, lequel dépasse hors de l'extrémité ouverte (27) de la douille de palier (9) en direction du joint préliminaire (38), et pénètre dans l'intervalle annulaire (46) entre les deux bras (49, 45) du joint préliminaire (38).

7. Garniture de croisillon selon la revendication 6, caractérisée en ce que le support (34) est pourvu, à son extrémité qui dépasse entre les bras (39, 45) du joint préliminaire (38), d'une collerette (35) dirigée vers l'extérieur par rapport à l'axe longitudinal (7), et en ce que dans l'espace intermédiaire annulaire (46) sont formées des cames (50) réparties à la périphérie de l'âme (44) du joint préliminaire (38), à l'opposé de la collerette (35).

8. Garniture de croisillon selon la revendication 6, caractérisée en ce que le deuxième bras extérieur (45) du joint préliminaire (38) comporte une deuxième lèvre d'étanchement périphérique (48), laquelle est appliquée de façon étanche contre la surface extérieure (36) du support (34).
